# EUROPEAN PATENT SPECIFICATION

(11) **EP 2 280 775 B1**
(45) Date of publication and mention of the grant of the patent: **27.09.2017**
(21) Application number: 09767162.2
(22) Date of filing: 13.04.2009
(51) Int. Cl.: B01D 35/30

(54) **FILTER SEAL**
FILTERABDICHTUNG
JOINT DE FILTRE

(30) Priority: 28.05.2008 US 128477
(43) Date of publication of application: 09.02.2011
(73) Proprietor: Cummins Filtration IP, INC., Minneapolis, MN 55432 (US)
(72) Inventor: HERMAN, Peter, K., Stoughton WI 53589 (US); MALGORN, Gerard, F-29000 Quimper (FR); KINDKEPPEL, Caryn, Sun Prairie, WI 53590 (US); PICARD, Jean-Yves, F-29000 Quimper (FR); LOICK, Menez, F-29170 Fouesnant (FR); ZOCH, Roger, Mcfarland WI 53558 (US)
(74) Representative: Regimbeau
(86) International application number: PCT/US2009/040302
(87) International publication number: WO 2009/154850

(56) References cited:
- EP-A2- 0 678 318
- WO-A1-02/07856
- FR-A1- 2 229 444
- US-A- 3 469 706
- US-A- 5 173 186
- US-A- 5 290 445
- US-A- 5 643 467
- US-A- 5 853 577
- US-A1- 2007 215 561
- US-B2- 7 122 123

## Description

### BACKGROUND

### FIELD OF THE INVENTION

This invention relates generally to the field of filters for fluids, and in particular to filters for fluids flowing in internal combustion engines or other apparatuses in which filter elements of those filters need to be replaced from time to time.

### DESCRIPTION OF THE RELATED ART

Fluid filters are used in a wide variety of applications. For example, in the automotive and general engine industry, they are used to filter fuel, coolant, oil and other lubricants, air, water, and other fluids, in various components of the engine. One example of a filter might be a typical cylindrical filter cartridge composed of a filter medium that can be constructed of, e.g., paper, cardboard, felt, melt-spun, or other media, often a material which can be incinerated when the element is replaced to reduce waste. End plates typically constructed of plastic, are usually joined to the element.

Such filter cartridges are installed inside housings, often in such a way as to cooperate with a center tube or standpipe, which can consist of one or more pieces.

In order to ensure sealing during filtration, elastomeric sealing rings are often arranged between center tube and flanges. Other methods are currently used to seal the filter housing to the filter element. These include the use of o-rings of gaskets. Many of these methods require several extra parts be added to the filtering apparatus. There are several problems associated with having extra parts for each seal. The extra pieces needed to make a seal between the housing and the filter element may be costly to manufacture and cumbersome to work with. There is an associated wait time to have extra parts manufactured. With more parts In the filtering apparatus, there is also a higher probability that problems will occur during the normal functioning of the filter. The time and skill required to replace the filter is also greater when there are more parts involved.

The present invention overcomes many of the problems present in the art.

### SUMMARY OF THE INVENTION

The present invention has been developed in response to the present state of the art, and in particular, in response to the problems and needs in the art that have not yet been fully solved by currently available designs. Accordingly, the present invention has been developed to provide an apparatus, system, and method for a filtering apparatus that overcomes many or all shortcomings in the art.

In one aspect of the invention, a filtering apparatus includes a filter element comprising a filter media, directly joining with a filter housing in sealing engagement, and a standpipe attached to an interior axial end of the filter housing, the filter housing containing a plurality of concentric, annular, ridges disposed on an interior axial end of the filter housing and a plurality of barbed protrusions disposed radially on an interior axial end of the filter housing.

In a further aspect of the invention, a filtering apparatus according to claim 1 is disclosed.

In a further aspect of the invention, a method of servicing a filtering apparatus according to claim 5 is disclosed.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Discussion of the features and advantages, and similar language, throughout this specification may, but do not necessarily, refer to the same embodiment.

The described features, advantages, and characteristics of the invention may be combined in any suitable manner in one or more embodiments. One skilled in the relevant art will recognize that the invention may be practiced without one or more of the specific features or advantages of a particular embodiment. In other instances, additional features and advantages may be recognized in certain embodiments that may not be present in all embodiments of the invention. These features and advantages of the present invention will become more fully apparent from the following description and appended claims, or may be learned by the practice of the invention as set forth hereinafter.

### BRIEF DESCRIPTION OF THE DRAWINGS

FIG. 1A is an exploded perspective view of an embodiment of a filtering apparatus;
FIG. 1B is a partial sectional view taken in a plane parallel to the page and passing through a central axis of the filtering apparatus of FIG. IA;
FIG. 2 is a cross-sectional view of another embodiment of a filter apparatus;
FIG. 3 is a cross-sectional view of the housing of the apparatus of FIG. 2;
FIG. 4 is a close-up cross-sectional view of the apparatus of FIG. 2;
FIG. 5 is an exploded cross-sectional view of the apparatus of FIG. 2;
FIG. 6 is a schematic of another embodiment of a filter apparatus;
FIG. 7 is a cross-sectional, perspective view of another embodiment of a filter apparatus ;
FIG. 8A is a cross-sectional, perspective view of another embodiment of a filter apparatus according to the present invention;
FIG. 8B is a cross-sectional, perspective view of another embodiment of a filter apparatus;
FIG. 9 is a cross-sectional view of another embodiment of a filter apparatus;
FIG. 10 is a cross-sectional view of the apparatus of FIG. 9;
FIG. 11 is a cross-sectional view of still another embodiment of a filtering apparatus;
FIG. 12 is a detailed partial sectional perspective view of a portion of the filtering apparatus of FIG. 12;
FIG. 13 is a diagrammatic sectional view of a filter in accordance with another embodiment; and
FIG. 14 is a diagrammatic sectional view of an attachment mechanism for joining two portions of a filter housing.

### DETAILED DESCRIPTION

Reference throughout this specification to "one embodiment," "an embodiment," or similar language means that a particular feature, structure, or characteristic described in connection with the embodiment is included in at least one embodiment of the present invention. Thus, appearances of the phrases "in one embodiment," "in an embodiment," and similar language throughout this specification may, but do not necessarily, all refer to the same embodiment.

Furthermore, the described features, structures, or characteristics of the invention may be combined in any suitable manner in one or more embodiments. In the following description, numerous specific details are provided to give a thorough understanding of embodiments of the invention. One skilled in the relevant art will recognize, however, that the invention may be practiced without one or more of the specific details, or with other methods, components, materials, and so forth. In other instances, well-known structures, materials, or operations are not shown or described in detail to avoid obscuring aspects of the invention.

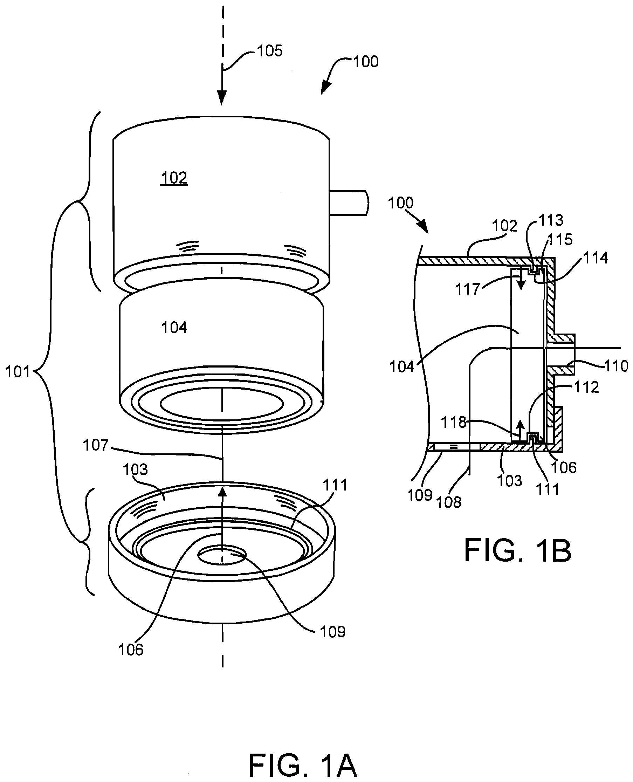

FIG 1A shows an exploded perspective view of a filtering apparatus 100. The filtering apparatus 100 includes a filter housing 101 having a first portion 102 and a second portion 103. The filtering apparatus 100 also includes a filter element 104. The first and second portions 102, 103 of the filter housing 101 may be brought together and coupled by threads or some other mechanism in surrounding relation to the filter element 104. The respective portions 102, 103, and the filter element 104 are configured such that when coupled together, the first and second portions 102 and 103 apply opposite compression forces 105 and 106 generally along an axis 107 to opposite axial ends of the filter element 104.

Figure 1B is a partial sectional view taken in a plane parallel to the page through the axis 107 with the filtering apparatus in an assembled condition. A flow path 108 of fluid to be filtered passes into the filtering apparatus 100 through an inlet opening 109, through the filter element 104, and out through an outlet opening 110. A protrusion 111 is disposed on the second portion 103 of the filter housing 101, as shown in Figures 1A and 1B. The filter element 104 has a recess 112 configured to receive the protrusion 111, as shown in Figure 1B. A similar protrusion 113 is disposed on the first portion of the filter housing 101, and a corresponding recess 114 configured to receive the protrusion 113 is provided in an axial end of the filter element 104. At least a portion of the filter element fits into respective relatively recessed regions 115, 116 of the housing 101 between the filter housing 101 and the protrusions 111, 113 at each axial end of the filtering apparatus. The material of the filter element in these regions 115, 116 may be somewhat compressed so that a denser condition of the material in these regions is resistive to flow therethrough by a fluid. In this way, the media of filter element 104 effectively seals directly to the filter housing 101 in these regions without the use of additional gasket material or other additional parts. Thus, the structure of the housing 101 and the filter element 104 and their interaction forms a seal that is integral with the filtering apparatus 100 and includes the filter media of the filter element 104.

To service the filter apparatus 100, a filter element 104 is produced or otherwise provided. The filter element 104 is placed directly into the filter housing 101 without additional elements. The filter element 104 is aligned so that the recess 112 in the filter element 104 matches with the protrusion 111 disposed on the filter housing 101. Similar alignment is performed for protrusion 113 and recess 114. Pressure in opposite axial directions 105, 106 is applied to force the filter element 104 axially into axial ends of the filter housing 101 as far as it will go. The axial force applied to the filter element 104 apply a compression load on the filter element 104 as indicated by arrows 117, 118 that holds the filter element 104 to the filter housing 101. Additionally, the filter housing 101 and the filter element 104 may be sized and configured to provide a radial pressure between the filter housing 101 and the filter element 104 that also holds the filter element 104 to the filter housing 101. The protrusions 111, 113 helps to insure that the filter element 104 is installed in the correct orientation and forms the relatively recessed regions 115, 116 so that the filter housing 101 seals properly to the filter element 104. The protrusions 111, 113 may also be configured to add radial pressure to the filter element 104 when it is installed in order to further ensure a proper seal.

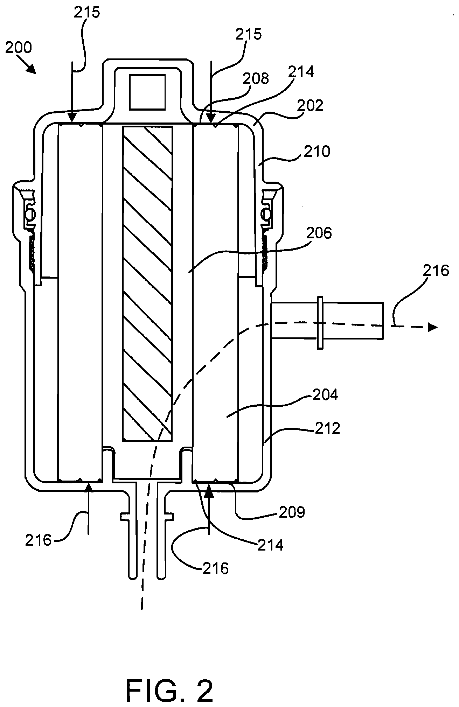

FIG. 2 shows a filtering apparatus 200. The filtering apparatus 200 includes of a filter housing 202, a filter element 204, and a standpipe 206. The filter housing 202 contains two interior axial ends 208 and 209, a top housing portion 210, and a bottom housing portion 212. When aligned properly, the filter housing 202 and the filter element 204 have a common axis. A plurality of ridges 214 extend from the interior axial ends 208 and 209. As used herein, a ridge is a protrusion that is small compared with the size of the filter housing and whose cross section has two sloped sides that come together at a high point. The ridges 214 are disposed radially outward from a center of the interior axial ends 208 and 209. As used herein, a radially disposed protrusion is a protrusion that is spaced at some radial distance from the center of an object. The radial distance may be different for each protrusion and the radial distance may change for different locations on the same protrusion. In a circular cylindrical housing, the ridges 214 may extend generally circumferentially to form closed loops along each of the interior axial ends 208, 209. In the embodiment of Figure 2, as with the other embodiments describe herein, the portions of the housing 210 and 212 apply opposite axial compression forces to ends of the filter element 204, as indicated by arrows 215 and 216.

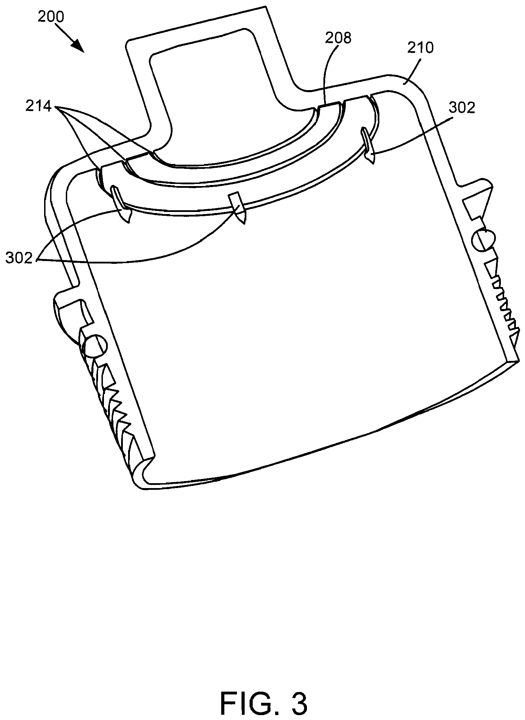

Figure 3 shows a close-up perspective view of the top housing portion 210 of the embodiment of FIG. 2. The top housing portion 210 includes the plurality of ridges 214. One or both of the interior ends 208 and 209 may additionally or alternatively have a plurality of barbed protrusions 302 disposed thereon. It can be seen from FIG. 3 that the ridges 214 are concentric, circular and annular. An annular configuration is a configuration that has a hollow center region that is not necessarily circular. That is, annular for the purposes of the present invention may include oval, square, rectangular, circular, triangular, and other shapes that have an opening surrounded by an endless or closed loop element. For housings, annular includes recesses of any shape that generally forms an endless or closed loop with walls generally forming inner and outer boundaries of the recesses. Thus, the recesses can have inner and outer walls that generally form volumes that may have any of a variety of shapes including oval, square, rectangular, circular, triangular and other closed loop shapes of any of a variety of cross sections. In the embodiment of Figure 3, the barbed protrusions 302 are arranged in a circle.

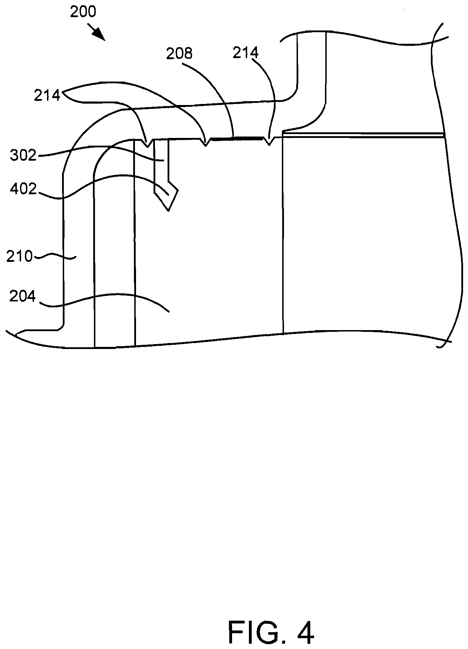

FIG. 4 shows a close-up sectional view of the top housing portion 210 of the filtering apparatus 200 of FIG. 2 with the filter element installed. The top housing portion 210 has the plurality of ridges 214 and the barbed protrusion 302 disposed thereon. The filter element 204 is installed such that the ridges 214 are pressed into the somewhat compressible structure of filter element 204 but do not puncture the filter element 204. That is, in this embodiment, the ribs locally displace/compress the void structure of the filter media, but do not permanently alter or tear the element structure. The ridges form recessed regions on the interior axial ends 208, 209 between respective ridges 214. In this and other embodiments, the ridges form protrusions that have recessed regions between respective ridges 214 and between the ridges 214 and other housing structure. In any case, the ridges compress the media of the filter element 204 in local regions generally surrounding the ridges 214. These regions of compressed media form resistance to flow between the housing 202 and the filter element 204 at the interior axial ends 208, 209, and thus form seals. The barbed protrusions 302 puncture and extend into the filter element 204. A barb 402 is disposed on the axial end of the barbed protrusions to assist in puncturing and holding the internal axial end 208 to the filter element 204. The barb 402 also inhibits inadvertent removal of the filter element 204 from the barb 402.

As shown in Figure 2, the filtering apparatus 200 is designed to have the fluid pass through the filter element 204 in a direction similar to direction 216. The fluid can travel in any other direction. If seals were not created between the filter element 204 and the interior axial ends, then the path of least resistance for at least some portion of the total fluid flow would normally be through the small gap(s) between the filter element 204 and the filter housing 202 at the interior axial ends 208 and 209. However, because of the ridges 214 and the seals formed in the media surrounding the ridges 214, the path of least resistance is no longer between the filter housing 202 and the filter element 204. This may be due in part to the fact that the fluid would need to travel over each ridge 214, requiring one or more bends in the flow. On the other hand, the filter element allows for substantially straight flow therethrough along most of the axial length of the filter element 204. In this way the ridges 214 form a seal by requiring a bent path of flow. Alternatively or additionally, the ridges help to create compressed regions in the media of the filter element 204 that reduce the local permeability of the media structure, thereby increasing the local resistance to flow and forming an adequate seal between the filter element 204 and the filter housing 202 as described herein. The interaction between the filter element 204 and the barbed protrusions 302 also helps to create the seal. When installed, the filter element 204 is pressed firmly against the interior axial ends 208 and 209 of the filter housing 202. The filter element 204 deforms slightly around the ridges 214. The axial force between the filter element 204 and the interior axial ends 208 and 209 of the filter housing 202 is maintained at least in part by the barbed protrusions 302. The barbs 402 of the barbed protrusions 302 holds the filter element 204 against the interior axial end 208 of the filter housing 202. This counteracts the stored energy of the compressed filter element 204 and inhibits the stored energy from forcing the filter element 204 away from the filter housing 202. Thus, the barbs 402 inhibit loss of the seal between the filter element 204 and the filter housing 202.

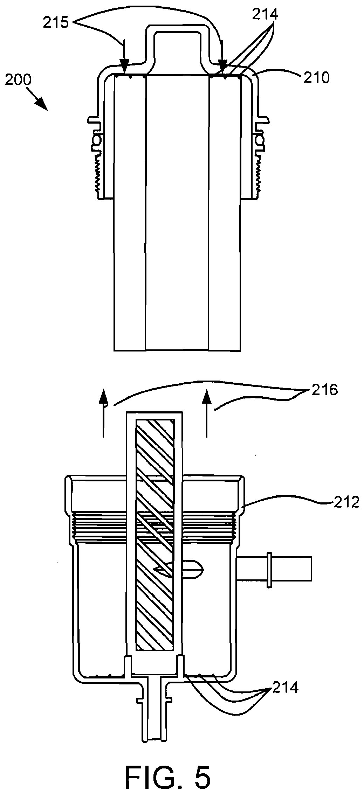

FIG. 5 shows an exploded view of the filtering apparatus 200 of FIG. 2. During replacement and installation of a filter element 204, the top housing portion 210 is removed from the bottom housing portion 212. In the case of replacement, the old filter element 204 is removed. A new filter element 204 is placed in either the top housing portion 210 or the bottom housing portion 212 so that the filter element 204 and the housing 202 will have a common axis. The top and bottom housing portions 210 and 212 are brought together with the filter element 204 axially aligned with and between each of the housing portions 210 and 212. Pressure is applied to the filter element 204 by the housing portions in the opposite compressing directions 215 and 216. The filter element 204 contacts the annular ridges 214 and is punctured by the barbed protrusions 302. The interior axial ends 208 and 209 of both the top housing portion 210 and the bottom housing portion 212 have a plurality of annular ridges 214. One or both of the top housing portion 210 and the bottom housing portion 212 may also have the barbed protrusions 302 described above. With the compressive load applied and maintained by the barbs and/or threads 220, 221, the filter element seals to both the top housing portion 210 and the bottom housing portion 212 when the two portions are coupled together with the filter element 204 between them.

In the prior art, the seal between a filter housing and a filter element is conventionally achieved through a combination of gaskets or o-rings that provide a seal between an interface of a separate filter "endcap" (which must be bonded to the filter to prevent bypass) and the filter housing. The present invention, on the other hand, reduces or eliminates the need for these additional parts because the seal is integral with the filter element 204 and comprises the material of the filter element 204. As described herein, the shape of the filter housing 202 interacts with the filter element 204 to create a seal.

As will be evident to someone skilled in the art in light of this invention, the configuration of the filter housing and the protrusions disposed thereon can be changed without departing from the spirit of this invention. In one embodiment, the ridges puncture the filter element to create a seal. In another embodiment, the ridges are equipped with prongs and are designed to puncture the filter element in only some areas. In this embodiment, the ridges act as a holding agent and as a sealing agent. As used herein, a holding agent is any method used to hold the filter element to the filter housing. As used herein, a sealing agent is any method used to seal the filter element to the filter housing. In another embodiment, only ridges are disposed on the interior axial end of the filter housing. In another embodiment, only barbed protrusions are disposed on the interior axial end of the filter housing. In another embodiment, ridges and barbed protrusions are disposed on only one interior axial end of the filter housing while the other end is configured to receive an end plate.

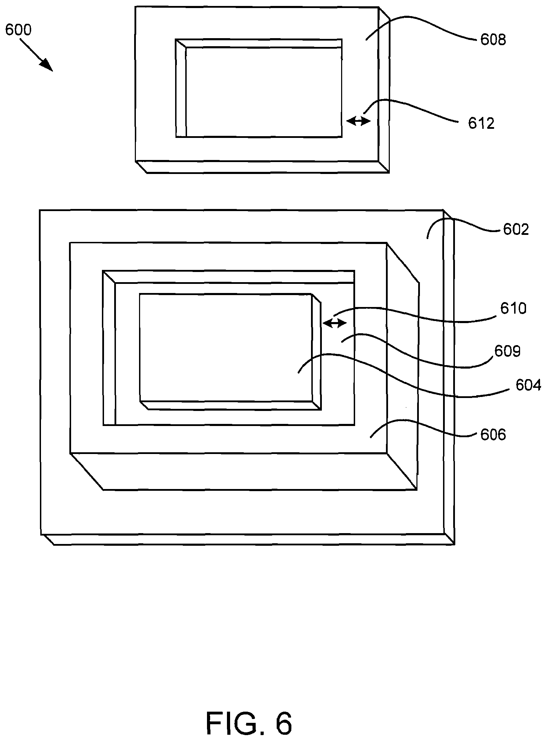

FIG. 6 shows a filtering apparatus 600. The filtering apparatus 600 includes a filter housing 602, a first protrusion 604 and a second protrusion 606 disposed on the filter housing 602, and a filter element 608. The first and second protrusions 604, 606 form a recessed region 609 therebetween. A spacing between the protrusions 604, 606 has a width 610 that is slightly smaller than a width 612 of a filter element 608. A housing cover (not shown may be provided which also compresses and upper region of the filter element 608 when coupled with the housing 602. This provides a tight fit compresses material of the filter element 608 at least locally in regions of the material that forms the filter element 608 at an interface between the filter element 608 and the housing 602. This compressed material or filter media forms a seal between the filter housing 602 and the filter element 608 when the filter element 608 is installed in the filter housing 602. In one embodiment, no additional material or mechanism is added to help create a seal between the filter housing 602 and the filter element 608. Rather, the filter media of the filter element 608 itself creates the seal to the filter housing 602.

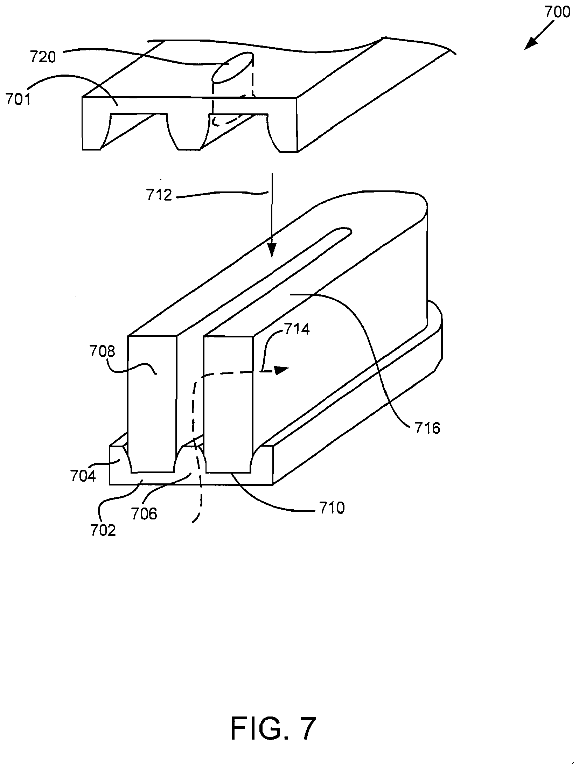

FIG. 7 shows a filtering apparatus 700. The filtering apparatus 700 includes a filter housing 702 with an annular protrusion 704 and a middle protrusion 706 disposed thereon, and a filter element 708. Both the annular protrusion 704 and the middle protrusion 706 are tapered and configured like a racetrack. As used herein, a tapered protrusion is one in which a side of the protrusion is not perpendicular to the top of the protrusion but extends at an angle less than 90 degrees. Sides of the annular protrusion 704 and the middle protrusion 706 are tapered to guide the filter element 708 into a recessed region between the annular protrusion 704 and the middle protrusion 706.

When installing the filter element 708 into a filter housing that includes a first portion 701 and a second portion 702, the filter element 708 is produced or otherwise provided. The filter element 708 is positioned so that an axial end 710 of the filter element 708 is positioned over a recessed region between the annular protrusion 704 and the middle protrusion 706. Force is applied in an axial direction 712 and the filter element 708 is urged into the space forming the recessed region between the annular protrusion 704 and the middle protrusion 706. The filter element 708 has a configuration that requires it to be deformed slightly as it enters the area between the annular protrusion 704 and the middle protrusion 706. The resulting local compression of filter media (and corresponding reduction in local flow permeability) and/or the bend in flow required by the protrusions 704, 706 create a seal between the filter element 708 and the filter housing portion 702. The deformation occurs mostly on the lateral sides of the filter element 708 as the filter element 708 squeezes between the annular protrusion 704 and the middle protrusion 706. The material of the filter element 708 creates the seal. Radial pressure and/or forces on the filter element 708 that are otherwise transverse to the axial direction 712 are caused by engagement of the annular protrusion 704 and the middle protrusion 706 on the filter element 708. These forces also help to hold the filter element 708 to the filter housing 702. Similar to the description of the installation of the filter element 708 into the second filter housing portion 702, the filter element 708 may be installed into the oppositely facing first housing portion 701. The first and second housing portions 701, 702 may be coupled directly or indirectly to each other and may and hold the filter element 708 therebetween in at least a slightly axially compressed state as described herein with regard to other embodiments.

In operation, fluid travels in a direction 714 along a path of least resistance. If no seal were provided between the filter element 708 and the housing portions 701, 702, then the path would likely not go through the filter element 708 but around axial ends 710, 716 of the filter element between the filter element 708 and the filter housing 702. However, because of the seals formed in accordance with the present invention there is resistance to flow around the axial ends 710 and 716. Due to the pressure between the annular protrusion 704, the middle protrusion 706, and the filter element 708, the path of least resistance is through the filter element 708. Furthermore, in order to travel between the filter element 708 and the filter housing 702, the fluid would have to travel in a bent course around the annular protrusion 704 and the middle protrusion 706 which would take more energy than the energy required to travel through the filter element 708. Because of the pressure between the annular protrusion 704, the middle protrusion 706, and the filter element 708, the filter element 708 deforms slightly to the contours of the filter housing 702 at the annular protrusion 704 and the middle protrusion 706. This creates a seal between the filter housing 702 and the filter element 708 that is sufficiently impenetrable to fluids. A similar compression and seal are formed between the filter element 708 and the first housing portion 701.

While the flow path 714 is shown entering at a longitudinal end between interior walls of the filter element 708 and exiting to the right through the filter element 708, it is to be understood that the fluid may also travel in any other direction with a similar seal being created between the filter housing portions 701, 702 and the filter element 708. Alternatively, a fluid to be filtered may enter through an inlet opening in the first housing portion 701 and exit through the filter element 708. Further alternatively, a fluid to be filtered may take an outside-in course entering through the filter element 708 and exiting through opening 720 or a longitudinal end.

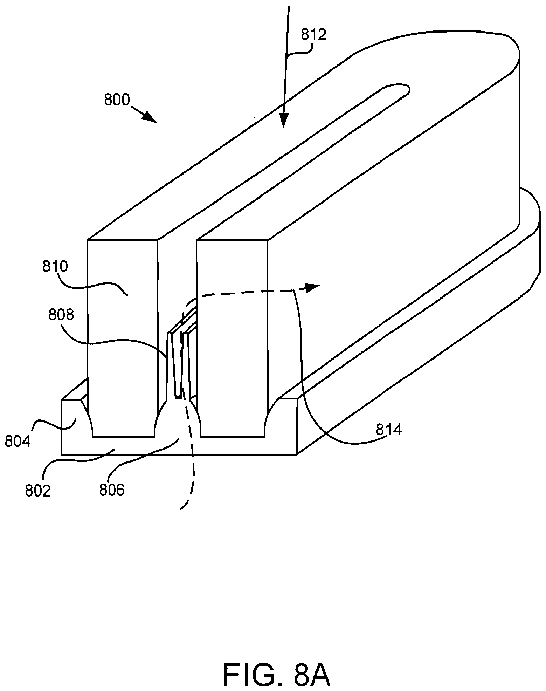

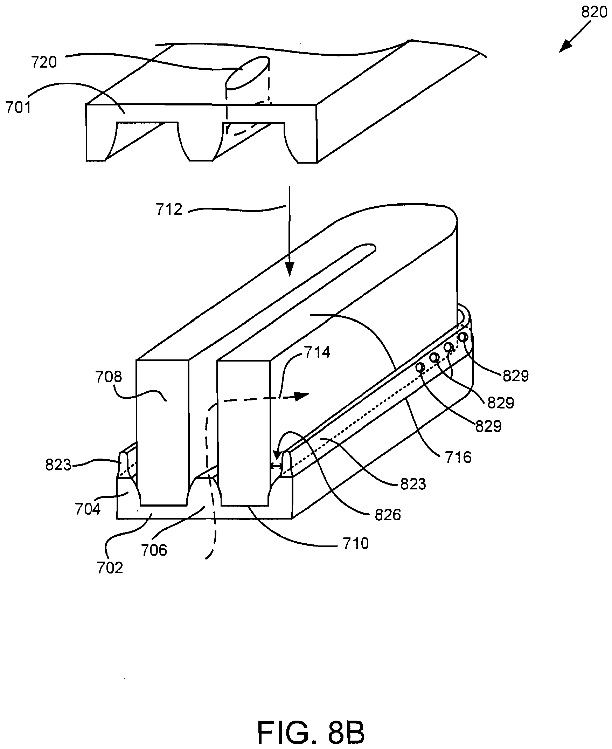

FIG. 8A shows a filtering apparatus 800 similar to the filtering apparatus of Figure 7. The filtering apparatus 800 includes a filter housing having a first housing portion (not shown) and a second housing portion 802. The first housing portion may be generally a mirror image of the second housing portion, as with the embodiment of Figure 7. Alternatively, the first housing portion may take a different form while being positioned to generally close an opposite axial end of the filtering apparatus 800. For example, the first housing portion 701 of Figure 7 could be integrated into the filtering apparatus of Figure 8. The embodiment of Figure 8 is similar to the embodiment of Figure 7 at least because the second housing portion 802 includes a first protrusion 804 and a middle protrusion 806. The embodiment of Figure 8A differs from the embodiment of Figure 7 at least because the middle protrusion 806 further includes a guide vane 808 which is utilized to guide a filter element 810 into the correct position as the filter element is installed. The guide vane 808 may have an additional advantage of supporting the filter element 810, especially when the flow is from outside in. That is, when the flow is in a direction opposite to the direction of flow path 814, a fluid may tend to bend the element 810 inward, especially when the filter element becomes loaded with debris. Thus, guide vanes 808 may fulfill the function of supporting the element 810 and inhibiting bending or buckling inward. Bending of the filter element 810 is more likely as the material of the element 810 ages and/or the element 810 experiences wear, weakening, softening, or becomes loaded with debris during use. The features of this embodiment may be combined with those of other embodiments, and the features of other embodiments may be combined with this embodiment without limitation.

For example, Figure 8B shows a filtering apparatus 820 similar to filter apparatuses 700 and 800 shown in Figures 7 and 8A. Like elements to those of Figures 7 and 8A are labeled similar to those shown in Figure 7, although similar elements are labeled with alternative numerals in Figure 8A. The embodiment of Figure 8B shows a guide vane 823 protruding upward from the annular protrusion 704. The guide vane 823 may aid in guiding the filter element 708 during installation similar to guide vane 808 shown in Figure 8A. Also, similar to the guide vane 808, guide vane 823 is capable of supporting the filter element 708 in the event that the filter element bends or buckles outwardly. Outward bending is more likely when the flow path 714 of a fluid being filtered is from the inside out, and the guide vane 823 inhibits collapse of such bending filter elements.

In order to provide support, a gap 826 shown in Figure 8B is relatively small. For example, the gap 826 may be in a range from one-half millimeter to ten millimeters. In another range the gap may be from one millimeter to seven millimeters. In still another range, the gap 826 may be from two millimeters to five millimeters. The gap may vary to any dimension inside and outside these ranges.

When the gap 826 is closed to at least some extent by bending of the filter element, overall flow may become restricted. In particular, when the filter element engages the guide vane 823, flow through a portion of the filter element that engaged with the guide vane 823 may be severely reduced or stopped. Thus, one or more holes 829 may be placed in the guide vane 823 to enable improved flow of fluid through the holes 829 on its flow path out of the filter element 708. A plurality of the through holes 829 may be provided in any pattern, including a grid or other pattern. While only a few holes 829 are shown in Figure 8B, it is to be understood that the holes 829 or pattern of holes may extend along any portion of the guide vane 823 up to and including along an entire length of the guide vane 823. These holes 829 enable flow through the filter element even in regions of the filter element that engage or are proximate to the guide vane 823. Similar holes may be applied in other embodiments including through the guide vane 808 in the embodiment of Figure 8A. In any case, the guide vanes, (and guide vanes with through holes), provide guidance, structural support to a downstream and/or an upstream side of a filter element, and passageways for flow of a fluid being filtered. It is to be understood that the gap 826 itself provides a passageway for fluid being filtered. Furthermore, alternative structure such as ribs on an inner surface of the guide vane may similarly provide passageways while also providing guidance and/or support for the filter elements. Further alternatively, the guide vanes shown and described herein may be replaced by a comb-like or otherwise intermittent guide vanes. Intermittent guide vanes are also capable of providing the functions of guiding, supporting, and/or enabling passage of fluid through spaces between intermittent protruding portions forming the guide vanes that extend from protrusions described as forming seals herein, for example.

In accordance with embodiments of this invention, the form of filtering apparatus 700 may be changed without departing from the spirit of this invention. In one embodiment, a recessed region between the protrusions has a rectangular configuration. In another embodiment, a recessed region between the protrusions has a circular configuration.

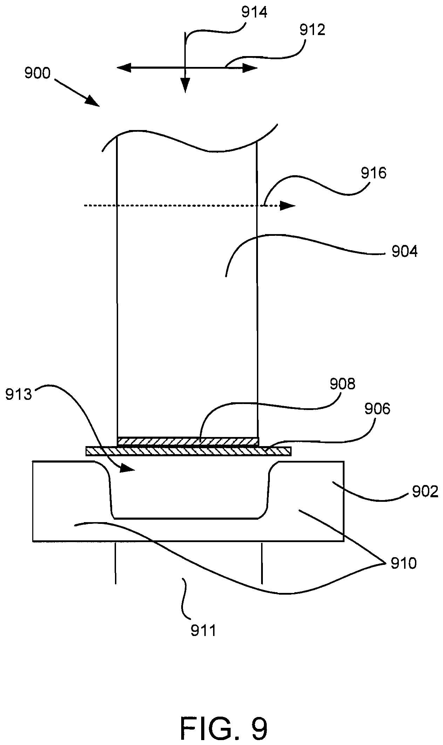

FIG. 9 shows a diagramatic view of a portion of a filter apparatus 900. The filter apparatus 900 consist of a filter housing portion 902, a filter element 904, and a material 906. The material 906 is attached to an axial end 908 of the filter element 904. The filter housing 902 comprises two protrusions 910 spaced at a distance 911 close to that of a width 912 of the filter element 904 and forming a recessed region 913. When the filter element 904 is installed, the filter element 904 is aligned over the width 912 and force is applied in a direction 914. The material 906 forms to the shape of the recessed region 913 between the protrusions 910 of the filter housing 902 and seals the filter element 904 to the filter housing 902.

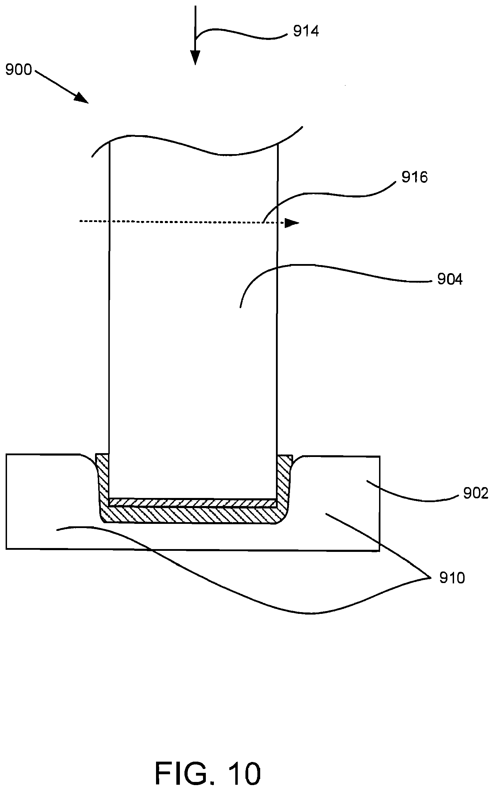

FIG. 10 shows a diagrammatic view of the filter apparatus 900 after the filter element 904 has been installed. In this view the filter element 904 has been installed into the recessed region 913 between protrusions 910 of the filter housing 902. The material 906 acts as an interface to improve the seal between the filter element 904 and the filter housing 902.

The filtering apparatus 900 is configured to have the fluid flow in a direction 916. Without any seal between the filter element 904 and the filter housing 902, the path of least resistance for the fluid would normally be between the filter element 904 and the filter housing 902. When the filter element 904 is forced against the filter housing 902 and between the protrusions 910, however, a seal is formed and the path of least resistance for flow of the fluid ends up being through the filter element 904. For the fluid to flow between the filter housing 902 and the filter element 904 when the filter element is installed in the recess of the filter housing, the fluid would have to flow around the protrusions 910. Therefore, even if the installation of the filter element 904 does not form a complete seal, installation does cause resistance to flow along a path between the filter element 904 and the filter housing 902 because fluid traveling along the path would be required to bend its course. The material 906 is also slightly deformed to match the contour of the filter housing 902 and the protrusions 910. This compresses the material of the filter element 904 locally near an interface between the filter element 904 and the housing portion 902 and further creates a seal that requires more energy for the fluid to pass through than the energy required for the fluid to pass through the filter element 904.

As in all the embodiments of the invention described herein, the overall filter housing, (only a part 902 of which is shown in Figures 9 and 10), must apply a compression force generally aligned with arrow 914. That is, the filter housing 902 will apply a force opposite to the direction of arrow 914, and an opposite portion of the filter housing will apply an opposite compression force to the filter element 904 in the direction of arrow 914. This aids in maintaining any seal between the axial ends of the filter element and the filter housing. The material 906 may have resilient or compressible characteristics and take up the majority of the compression forces. The filter element 904 may be reinforced in the area by a relatively stiff or strong material at 908 such that compression of filter element 904 itself is reduced or eliminated when the filter element 904 is installed between protrusions 910 in filter housing 902.

In one embodiment, element 908 shown in Figure 9 may be a thin stiffened section that may include a thin layer or coating of epoxy or other material. For example, a thin layer of fibrous material may be melted in order to creating fiber-to-fiber connections that are relatively stiff. This stiffened section 908 could thus resist compression and create a tighter seal with the layer 906. This is beneficial, for example, when the material of the filter element 904 is overly compressible.

The material 906 may have filtering capabilities for cases in which the filter element 904 is installed improperly between the protrusions 910 in filter housing 902. For example, if the filter element 904 is installed non-perpendicular, for example, the material 906 with its resiliency and filtering capabilities could take up space in gaps that might otherwise be left. In this way, material 906 could clean contaminants from the fluid flow in addition to the cleaning by the filter element 904.

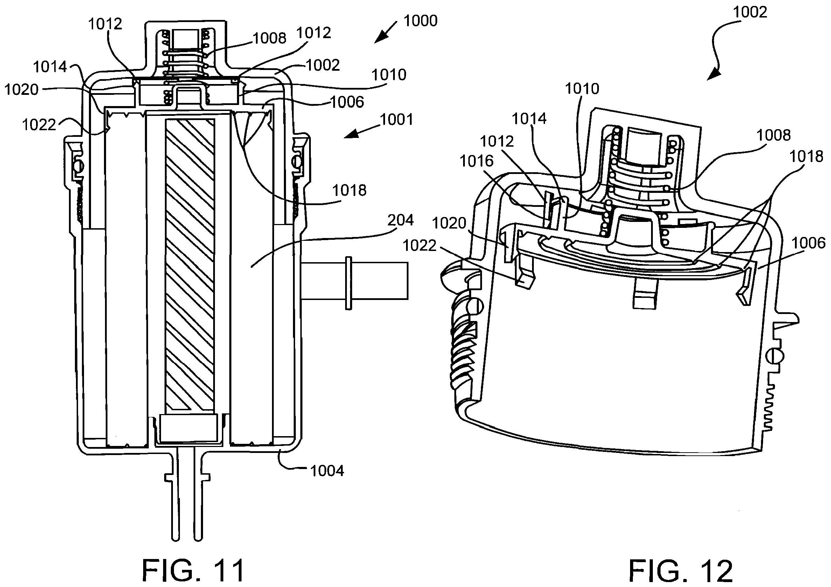

Figure 11 is a sectional view of a filtering apparatus 1000 in accordance with an embodiment that is similar to the embodiments of Figures 2-5. However, the filtering apparatus 1000 has a filter housing 1001 that includes a first portion 1002 and a second portion 1004. The filter housing 1001 further includes a floating endplate 1006 supported on a first portion 1002 of the filter housing 1001 by a resilient element such as a spring 1008. The floating endplate maybe further supported on the first portion 1002 by a guide wall 1010 extending from the floating end plate 1006 toward the first portion 1002. The guide wall 1010 is slidable engaged by tongues 1012 that extend from the first portion 1002.

Figure 12 is a detailed partial sectional perspective view of the first portion 1002 of the housing 1001 in which the filter element has been removed for clarity. As shown in Figure 12, the guide wall 1010 has a lip 1014 and the tongues have prongs 1016 that interact to inhibit inadvertent separation of the floating endplate 1006 from the first portion 1002. Any of a variety of other structures could be implemented on each of the first portion 1002 and the floating endplate 1006 in order to enable relative axial movement between them. Furthermore, other resilient elements could be used in place of the sprint 1008.

As with the embodiments of Figures 2-5 described above, the floating end plate 1006 of the embodiment of Figures 11 and 12 may have protrusions including one or more ridges 1018 that are to be directly engaged by the filter element 204. The spring 1008 applies a continuous force after installation such that a pressure is applied to the filter element 204 by the ridges 1018. A compression of the material of the filter element 204 in a local region surrounding the ridges helps to cause a resistance to flow of fluid between the floating end plate 1006 and the filter element 204. Furthermore, the ridges 1018 require a bent path for fluid that would pass between the floating endplate 1006 and the filter element 204. Thus, the structure on the floating endplate 1006 and the filter media of the filter element 204 interact to form a seal between the filter element 204 and the floating endplate 1006. The floating endplate may further include barbed protrusions 1020 similar to the barbed protrusions 302. The barbed protrusions 1020 have barbs 1022 that may function to hold the filter element 204 to the floating endplate 1006 substantially similarly to the function of the barbed protrusions 302 and barbs 402 described above. However, as shown in figure 11, the barbed protrusions do not penetrate through an axial end of the filter element 204. Rather, the barbed protrusions extend on a radially outer surface of the filter element 204, and the barbs 1022 penetrate or at least grip into the filter element 204 to hold the filter element on the floating endplate. Other structural configurations may be alternatively or additionally applied to the floating endplate 1006. For example, any combination of one or more of the compressive structures shown and described with regard to the embodiments of Figures 1 and 6-10 may be applied instead of or in addition to the structures shown in Figures 11-12. The floating endplate may also be additionally or alternatively applied to the second portion 1004 of the filter housing 1001 without limitation.

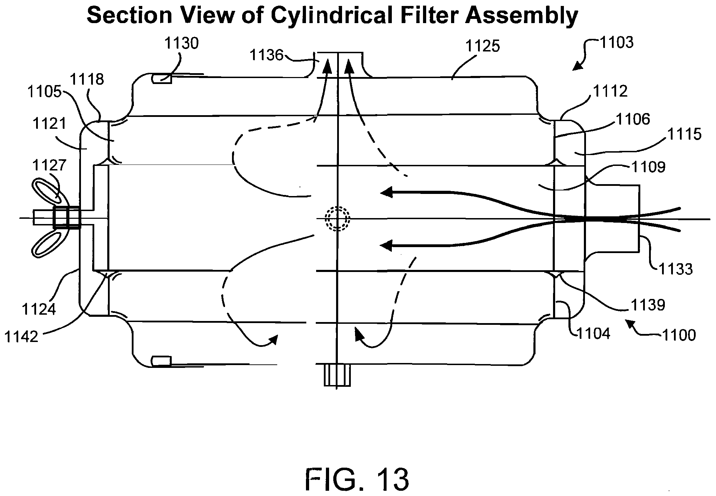

Figure 13 is a diagrammatic sectional view of a filter 1100 including a housing 1103 and a filter element 1106 in accordance with an alternative embodiment of the present invention. In this embodiment, structure on one or more of the housing 1103 and a standpipe 1109 act to compress axial ends 1104, 1105 of the element 1106. As with the embodiments described above, the compressed material in the end regions of the element 1106 creates a higher resistance to flow and thus forms an integral seal. In the example shown in figure 13, the housing 1103 has a compressing element in the form of a radially reduced portion 1112 at a first end 1115, and a radially reduced portion 1118 at a second end 1121 of the housing 1103. As may be appreciated, the radially reduced portion 1118 forms part of a cover 1124, which may be secured in sealed relation to a main body 1125 of the housing 1103 by a wing nut 1127, for example. A cover gasket 1130 is disposed between the main body 1125 of the housing 1103 and the cover 1124. Thus, a fluid to be filtered may flow into an inlet 1133, pass outward through the filter element 1106, and out through an outlet 1136 during use.

The standpipe 1109 may additionally have compressing elements in the form of radially protruding elements 1139, 1142 at respective first and second ends thereof. The radially protruding elements 1139, 1142 may be disposed at positions generally corresponding to opposite axial ends 1104, 1105 of the filter element 1106 and the radially reduced portions 1112, 1118 of the housing 1103. In this way, the radially protruding elements 1139, 1142 and the radially reduced portions 1112, 1118 may receive respective first and second ends 1104, 1105 of the element 1106 therebetween in a squeezing or compressing relation. That is, the radially reduced portions 1112, 1118 and the radially protruding elements 1139, 1142 are spaced apart at distances at least slightly less than an uncompressed thickness of the filter element 1106. As with other embodiments described herein, structure at the ends 1115, 1121 of the housing 1103 in this embodiment locally displaces/compresses the void structure of the filter media of the filter element 1106. The compressed regions in the media of the filter element 1106 reduce the local permeability of the media structure, thereby increasing the local resistance to flow and forming a seal between the filter element 1106 and the filter housing 1103.

For purposes of this disclosure, one or both of the ends 1115 and 1121 may be considered to be axial ends or bases of the housing. Wall structure forming one or both of the stand pipe 1109 and the radially reduced portions 1112, 1118 may be considered to be protrusions that extend from the axial ends or bases and form recessed regions that receive and at least partially compress the filter element 1106. Thus, the wall structure provides protrusions that at least in part form interior axial ends of the housing 1103. This wall structure forms recessed regions that receive and compress the filter element 1106 whether the wall structure has distinct compressing elements or not. In the embodiment of Figure 13, the wall structure or protrusions extending from the axial ends or bases form recessed regions for each end of the filter element 1106.

It is to be understood that a compressing element such as radially protruding elements 1139, 1142 may be provided on one of the standpipe and the housing and still provide the compression needed to form the integral seal in the filter element 1106. For example, the radially reduced portions 1112, 1118 may sufficiently compress the element 1106 so that there is no need for radially protruding elements 1139, 1142. In alternative embodiments, the radially protruding elements 1139, 1142 and the radially reduced portions 1112, 1118 maybe supplied by removable elements. Further alternatively, the compressing elements may include both radially reduced portions 1112, 1118 and radially protruding elements 1139, 1142. Additionally to one or both of these compressing elements, the compressing elements described with regard to the other embodiments may be incorporated with this embodiment. Similarly, the compressing elements of this embodiment may be incorporated with the other embodiments described herein without limitation.

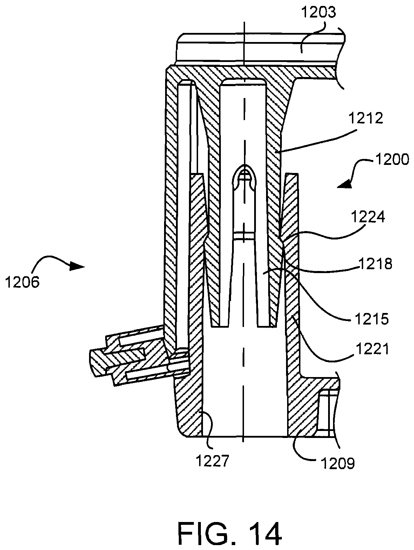

Figure 14 is a diagrammatic sectional view of a filter housing cover attachment mechanism 1200, which may be applied in any of a variety of forms with the various embodiments of the invention disclosed herein. As may be appreciated, one portion 1203 of a housing 1206 may be secured to another portion 1209 of the housing 1206 to surround and enclose a filter element. As has been described herein, the attachment mechanism 1200 may draw the two portions 1203, 1209 together in a compressing configuration that engages and at least slightly compresses the filter element. A post 1212 may include one or more tines 1215 having a catch 1218. When the portions 1203, 1209 are properly aligned, the post 1212 can be inserted into a receiver 1221. The receiver 1221 has a shoulder 1224 that engages the catch 1218 and secures the portions 1203, 1209 against inadvertent separation once they have been assembled together around a filter element. A plurality of pairs of posts and receivers 1212, 1221 may be provided on each of the portions 1203, 1209. Thus, a specific relative position associated with alignment of the respective pairs of posts and receivers 1212, 1221 can be provided for proper seating of the filter element on the portions 1203, 1209. One of the benefits of the attachment mechanism 1200 is that the receiver 1221 has an external access opening 1227 into which a user can insert a screwdriver or other tool in order to pry gently on the tines 1215 and disengage the catches 1218 from the shoulders 1224 when it is desired to separate the portions 1203, 1209 for servicing or replacement of the filter element.

Other attachment mechanisms may be alternatively or additionally incorporated into the filter housing 1203 of figure 14. In fact, the attachment mechanisms shown and described with regard to all the embodiments of the present invention may be incorporated singly or in any combination. Other attachment mechanisms may be additionally or alternatively incorporated, including but not limited to over-center clips and/or snap-lock structures.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes which come within the meaning and range of equivalency of the claims are to be embraced within their scope.

## Claims

1. A filtering apparatus (800, 820) comprising:
a filter element; a filter housing (701, 801, 702, 802) having an axial end; a structure on the filter housing, the structure including at least one protrusion (704, 804, 706, 806), extending from the axial end and providing a recessed region that is configured to directly engage the filter element (708, 810) configured for placement in the housing, the recessed region having a slightly smaller width than a thickness of the filter element in an uncompressed condition;
wherein engagement between the structure and the filter element creates a seal between the filter housing and the filter element;
**characterized in that** said at least one protrusion is disposed on an interior of the filter element, the structure further comprising a guide vane extending axially from said at least one protrusion, whereby the guide vane (808) is capable of guiding the filter element into the recessed region as the filter element is installed.

2. The filtering apparatus of claim 1, wherein:
the structure comprises a plurality of protrusions including the at least one protrusion, and
the protrusions are racetrack configured.

3. The filtering apparatus of claim 1, wherein an axial end of the filter element is hardened and further comprising a material (906) between the filter element and the filter housing, the material insuring sealing between the housing and the element.

4. The filtering apparatus of claim 2, wherein:
the filter element has a race track-configuration; and
the filter housing includes a first protrusion and a second protrusion disposed on an interior axial end of the housing wherein the recessed region is a closed loop recess between the first and second protrusions is, at least one of the first protrusion and the second protrusion has a race track-configuration disposed at least partially axially through the filter element.

5. A method of servicing a filtering apparatus (800, 820) according to any of the preceding claims, the method comprising:
providing a housing (701, 801, 702, 802) and a filter element (708, 810) disposed in the housing; removing the filter element from the housing; installing a second filter element and sealing it to the housing;
wherein installing the second filter element comprises pressing the filter element against the axial end of the filter housing and into a recessed region between a first and second protrusions disposed on the axial end of the filter housing, wherein the recessed region has a slightly smaller width than a thickness of the filter element in an uncompressed condition, the filter element being guided into the recessed region by the vane and forced into the recessed region to produce a seal.

## Patentansprüche

1. Filtervorrichtung (800, 820), aufweisend:
ein Filterelement;
ein Filtergehäuse (701, 801, 702, 802), das ein axiales Ende aufweist;
eine Struktur auf dem Filtergehäuse, wobei die Struktur mindestens einen Vorsprung (704, 804, 706, 806) aufweist, der sich vom axialen Ende erstreckt und einen ausgesparten Abschnitt bereitstellt, der für einen direkten Eingriff mit dem Filterelement (708, 810) konfiguriert ist, das für Anordnen im Gehäuse konfiguriert ist, wobei der ausgesparte Abschnitt eine geringfügig geringere Breite aufweist als eine Dicke des Filterelements in einem unkomprimierten Zustand;
wobei der Eingriff zwischen der Struktur und dem Filterelement eine Abdichtung zwischen dem Filtergehäuse und dem Filterelement bewirkt;
**dadurch gekennzeichnet, dass** der mindestens ein Vorsprung an einem Innenraum des Filterelements angeordnet ist, wobei die Struktur ferner eine Leitschaufel umfasst, die sich axial von dem mindestens einen Vorsprung erstreckt, wobei die Leitschaufel (808) das Filterelement in den ausgesparten Abschnitt führen kann, wenn das Filterelement installiert wird.

2. Filtervorrichtung nach Anspruch 1, wobei:
die Struktur mehrere Vorsprünge einschließlich des mindestens einen Vorsprungs aufweist, und
die Vorsprünge eine Rennbahnkonfiguration aufweisen.

3. Filtervorrichtung nach Anspruch 1, wobei ein axiales Ende des Filterelements gehärtet ist und ferner ein Material (906) zwischen dem Filterelement und dem Filtergehäuse aufweist, wobei das Material ein Abdichten zwischen dem Gehäuse und dem Element sicherstellt.

4. Filtervorrichtung nach Anspruch 2, wobei:
das Filterelement eine Rennbahnkonfiguration aufweist; und
das Filtergehäuse einen ersten Vorsprung und einen zweiten Vorsprung aufweist, die auf einem inneren axialen Ende des Gehäuses angeordnet sind, wobei der ausgesparte Abschnitt eine geschlossene Schlaufenaussparung zwischen den ersten und zweiten Vorsprüngen ist, mindestens einer des ersten Vorsprungs und des zweiten Vorsprungs eine Rennbahnkonfiguration aufweist, die mindestens teilweise durch das Filterelement angeordnet ist.

5. Verfahren zum Warten einer Filtervorrichtung (800, 820) nach einem der vorhergehenden Ansprüche, wobei das Verfahren Folgendes umfasst:
Bereitstellen eines Gehäuses (701, 801, 702, 802) und eines im Gehäuse angeordneten Filterelements (708, 810); Entfernen des Filterelements aus dem Gehäuse; Installieren eines zweiten Filterelements und Abdichten desselben am Gehäuse;
wobei das Installieren des zweiten Filterelements Drücken des Filterelements gegen das axiale Ende des Filtergehäuses und in einen am axialen Ende des Filtergehäuses angeordneten ausgesparten Abschnitt zwischen einem ersten und zweiten Vorsprüngen umfasst, wobei der ausgesparte Abschnitt eine geringfügig geringere Breite aufweist als eine Dicke des Filterelements in einem unkomprimierten Zustand, das Filterelement durch die Leitschaufel in den ausgesparten Abschnitt geführt und in den ausgesparten Abschnitt gedrückt wird, um eine Abdichtung zu erzeugen.

## Revendications

1. Dispositif de filtration (800, 820), comprenant :
un élément de filtre ;
un logement de filtre (701, 801, 702, 802) ayant une extrémité axiale ;
une structure sur le logement de filtre, la structure comprenant au moins une saillie (704, 804, 706, 806) s'étendant à partir de l'extrémité axiale et formant une région en renfoncement qui est configurée pour se mettre directement en prise avec l'élément de filtre (708, 810) configuré en vue d'un placement dans le logement, la région en renfoncement ayant une largeur légèrement inférieure à une épaisseur de l'élément de filtre dans une condition non comprimée ;
dans lequel la mise en prise entre la structure et l'élément de filtre crée un joint entre le logement de filtre et l'élément de filtre ;
**caractérisé en ce que** ladite au moins une saillie est agencée sur une partie intérieure de l'élément de filtre, la structure comprenant en outre une aile directrice s'étendant axialement à partir de ladite au moins une saillie, moyennant quoi l'aile directrice (808) peut diriger l'élément de filtre à l'intérieur de la région en renfoncement lorsque l'élément de filtre est installé.

2. Dispositif de filtration selon la revendication 1, dans lequel :
la structure comprend une pluralité de saillies incluant la au moins une saillie, et
les saillies sont configurées selon un circuit.

3. Dispositif de filtration selon la revendication 1, dans lequel une extrémité axiale de l'élément de filtre est durcie et comprenant en outre un matériau (906) entre l'élément de filtre et le logement de filtre, le matériau assurant le joint entre le logement et l'élément.

4. Dispositif de filtration selon la revendication 2, dans lequel :
l'élément de filtre a une configuration de circuit ; et
le logement de filtre comprend une première saillie et une seconde saillie agencées sur une extrémité axiale intérieure du logement, dans lequel la région en renfoncement est un renfoncement en boucle fermée entre les première et seconde saillies, au moins une saillie parmi la première saillie et la seconde saillie a une configuration de circuit agencée au moins en partie axialement à travers l'élément de filtre.

5. Procédé de maintenance d'un dispositif de filtration (800, 820) selon l'une quelconque des revendications précédentes, le procédé comprenant :
la fourniture d'un logement (701, 801, 702, 802) et d'un élément de filtre (708, 810) agencé dans le logement ; le retrait de l'élément de filtre du logement ; l'installation d'un second élément de filtre et son scellage au logement ;
dans lequel l'installation du second élément de filtre comprend la pression de l'élément de filtre contre l'extrémité axiale du logement de filtre et à l'intérieur d'une région en renfoncement entre une première et une seconde saillies agencées sur l'extrémité axiale du logement de filtre, dans lequel la région en renfoncement a une largeur légèrement inférieure à une épaisseur de l'élément de filtre dans une condition non comprimée, l'élément de filtre étant guidé à l'intérieur de la région en renfoncement par l'aile et forcé à l'intérieur de la région en renfoncement pour produire un joint.
